# EUROPEAN PATENT SPECIFICATION

(11) **EP 0 603 982 B1**
(45) Date of publication and mention of the grant of the patent: **23.08.2000**
(21) Application number: 93203656.9
(22) Date of filing: 23.12.1993
(51) Int. Cl.: A01D 34/00, A01D 34/84, A01D 75/20, A01D 34/82

(54) **Device for trimming grass**
Fadenschneider
Tondeuse à fil de coupe flexible

(30) Priority: 23.12.1992 NL 9202252; 16.08.1993 NL 9301416
(43) Date of publication of application: 29.06.1994
(60) Divisional application: 99204032.9
(73) Proprietor: SKIL EUROPE B.V., NL-4825 BD Breda (NL)
(72) Inventor: Jung, Boudewijn Casper, NL-4621 BJ Bergen op Zoom (NL); Van Rijen, Johannes Gerardus, NL-4841 RN Prinsenbeek (NL); Houben, Jan Peter, NL-4834 LV Breda (NL)
(74) Representative: Hoorweg, Petrus Nicolaas

(56) References cited:
- EP-A- 0 005 540
- EP-A- 0 222 515
- DE-A- 2 448 129
- DE-A- 3 506 717
- US-A- 2 263 431
- US-A- 2 702 978
- US-A- 3 872 930
- US-A- 4 603 478
- US-A- 5 060 383
- US-A- 5 115 870
- US-E- R E21 274

## Description

The invention relates to a device for trimming vegetation, such as grass and the like, comprising a motor housing, a motor with motor shaft mounted therein and a reel carried by the shaft for at least one line, the or each end part of which is unwound and cut off over a pre-determined length and rotated round the motor shaft in an active plane perpendicular to the motor shaft, as well as a handle connected to the housing and wherein a cover plate connected to the housing is arranged on the same side of the housing as the handle, said cover plate extending above the active plane.

Such a device is disclosed in EP-A-0 222 515.

Such devices can be used in two main positions, namely that wherein the end of the line is swung around in a practically horizontal plane and that wherein the end of the line is swung around in a practically vertical plane. For easy handling of the device the handle must therefore be adjusted relative to the housing and the support of the device on the ground must likewise be adapted.

The invention has for its object to improve the support such that not only is a good guiding realized in the vertical plane, but that the guiding in the horizontal plane also serves to prevent wire breakage and excessive wear of the line.

The device according to the invention is distinguished in that a bounding element defining a curved outer periphery is arranged on the side of the housing remote from the handle and inbetween said cover plate and said plane and extending, as seen in the axial direction of the motor shaft, not further than the circle covered by the line, the bounding element being one or more wheels.

Due to the bounding element, which also serves as support for the device, which takes the form of one or more wheels along the periphery of the cover plate, an efficient support can be effected. This support may have a relatively large radius of curvature resulting in the advantage of vertical movements which are relatively small and a horizontal movement which remains rectilinear, also on uneven grass or ground surfaces.

If the bounding element moreover extends over a large part of the active plane of the line end portion, the line will not be bent close to the wire reel when approaching an obstacle but at a greater distance which considerably reduces the danger of wire breakage.

Above mentioned and other features of the invention will be elucidated further in the figure description of a number of embodiments hereinbelow.

In the drawing:
figure 1 shows a perspective top view of a line trimmer according to the invention, wherein several protective parts have been broken away for clarification;
figure 2 shows a standing section through the motor shaft of the device of figure 1;
figures 3a and 3b show in each case a side view of a device in the respective main positions of use thereof;
figure 4 shows a perspective front view of another embodiment of the device according to the invention;
figures 5 and 6 each show a perspective front view of a device in yet other variants;
figure 7 is a perspective view of a detail of the bounding element with cutting member according to the invention.

Designated in the figures with the numeral 1 is the motor housing, in which an electric motor 2 is accommodated.

On the underside of housing 1 a motor shaft 3 protrudes downward, on which motor shaft is arranged a reel 4 for a trimming line 5. The trimming line 5 is wound onto the reel and protected in a reel housing 6, which housing is provided with a passage opening 7 for guiding through the active end part of line 5. Housing 6 is closed off on the underside by a press-in cover 9 which can support on the ground. By pressing in a cover 9, a determined length of line 5 is released each time and cut to length in order to enable cutting of the grass.

When the wire end 5 swings round the shaft 3, this wire end will follow a determined circular path, which path forms an active plane that extends perpendicularly of the shaft 3.

The housing 1 is further provided with a handle 10 which is embodied with a shank 11 which is connected to a part of the housing 1 via a ball joint 12. A second handle 13 can be arranged halfway along the shank. The shank and handle 10, 11 can be set in various ways, which is further elucidated below.

On the side of housing 1 lying towards the handle 10 the active plane through which the line 5 is moved is protected on the top side by a cover plate 15. This cover plate serves as protection against grass, small stones, sand or wire portions being thrown around which can be dangerous for the user and his surroundings. The cover plate 15 only covers a sector angle of the complete circle around the bottom end of the housing, so that the wire remains fully visible on the side of the housing 1 remote from the user. This serves for observation of the work.

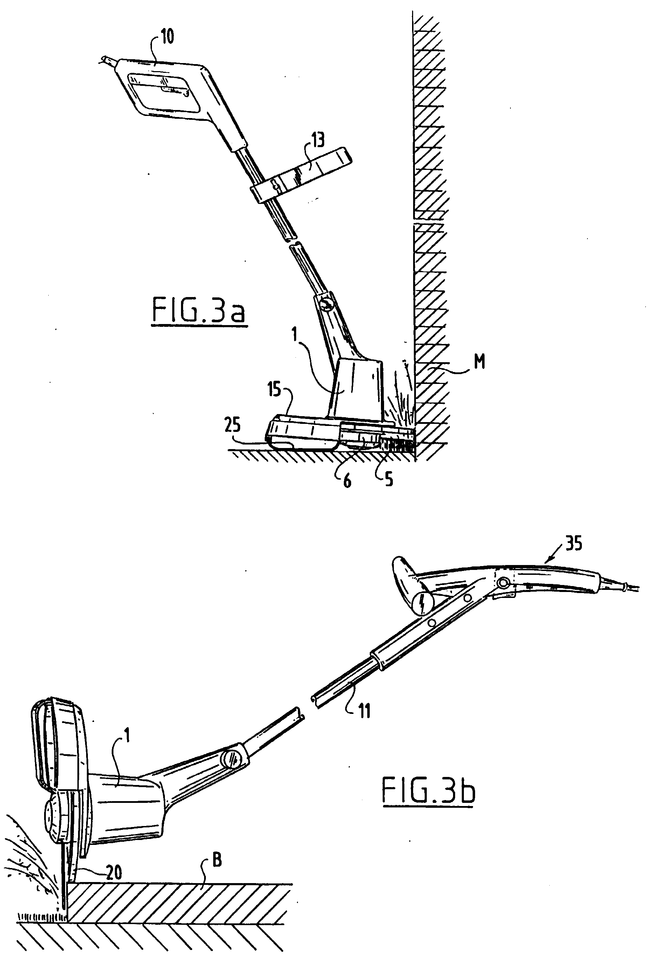

Because the machine is used in two positions, as shown in figures 3a and 3b, the wire end part 5 can come too close to obstacles, as indicated in figure 3a by a wall M. In order to prevent housing 1 and therefore wire end part 5 approaching too close to the wall M, the invention proposes arrangement of a bounding element 20.

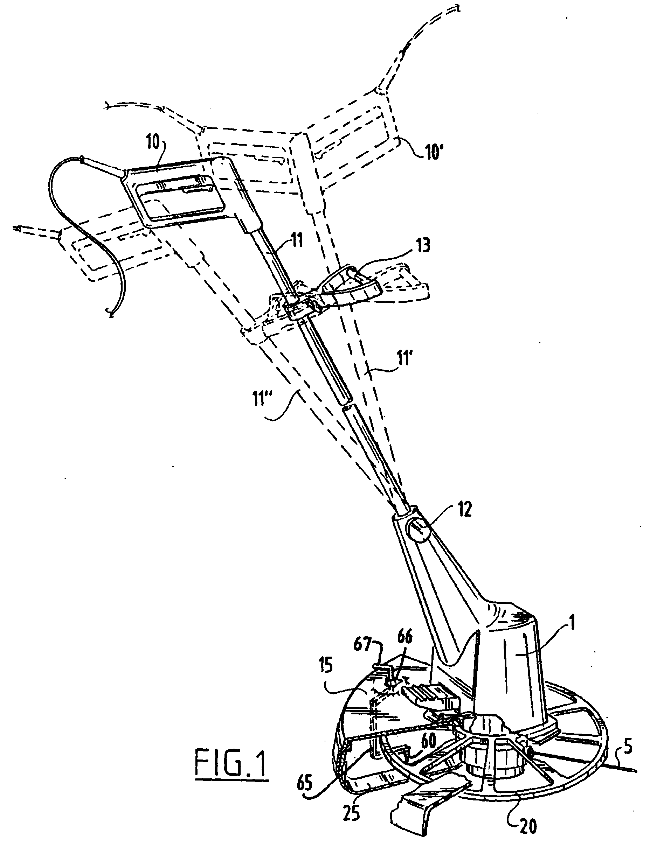

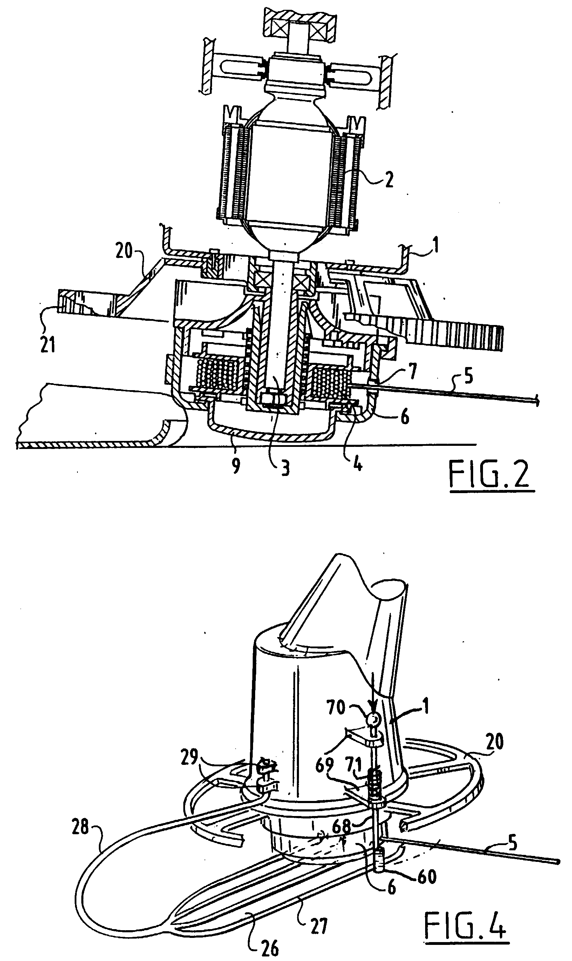

In the first embodiment according to figures 1 to 3 and 4 the bounding element 20 is embodied as a spoke wheel mounted concentrically round the motor shaft 3 on the underside of housing 1. Figure 2 shows that the spoke wheel can be slightly cup-shaped in order to place the peripheral edge 21 close to the active plane of the wire end 5.

The bounding wheel 20 is freely rotatable so that, see figure 3a, housing 1 respectively reel housing 6 cannot come too close to the wall M. The wire end part 5 is therefore bent through a wider angle whereby wire breakage is avoided.

In the position according to figure 3b, the bounding element 20 is used as roller wheel, wherein the periphery 21, whether or not provided with a profile, rolls over the ground surface B. Due to the comparatively large wheel periphery, that is, the relatively large radius of curvature, operation of the device in this position is also considerably facilitated as support.

In the position according to figure 3a, the device is supported by a carriage 25 on the underside of the cover plate 15. A special feature of this carriage 25 is that it extends from the edge of the cover plate in the direction of the rotation shaft 3 of the reel 4. The carriage 25 therefore leaves clear the cover 9 of reel housing 6 such that this remains freely accessible for replacing the reel and for regularly being able to supply new lengths of wire 5.

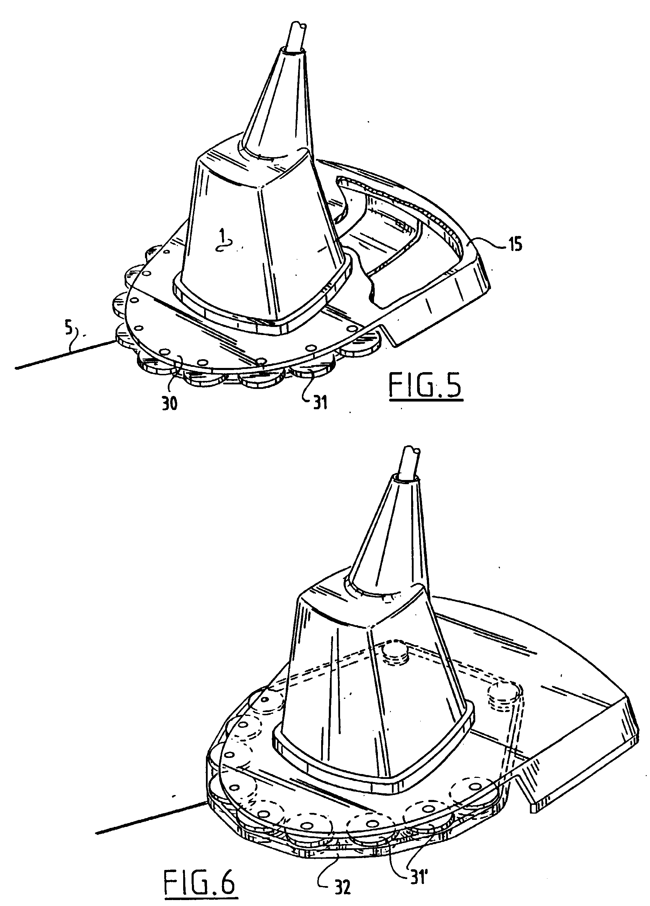

In figure 4 is shown an alternative embodiment of a carriage. This carriage consists of a supporting surface 26 which extends under reel 4 respectively reel housing 6 and which in the embodiment shown has a forked shape, consisting here of four parallel wire ends 27 which are mutually connected on the front side and continue in a wire 28, the end of which is mounted in two eyelets 29 on the front side of motor housing 1. The wire 28 is freely turnable in the eyelets 29 so that when the wire swivels to the left or right the wire ends 27 adjacent the reel housing 6 turn, whereby this left clear. This special support according to figure 4 can thus also swivel away when the device is used in the position according to figure 3b, that is, that bounding element 20 and the shape of the wheel can roll freely over the ground. Due to the ability to swivel, the support of the device will however remain optimal when the device is moved forward by means of the handle 10 (not shown in figure 4), wherein the wire ends 27 exert a self-aligning action on the support owing to the eccentric mounting 29 of the support.

It will be apparent that the wire 28 of the support is curved such that it remains out of the active plane of the line 5. Although not shown, the support wire 28 can also be pushed and fixed into eyelets 29 in axial direction so that a height adjustment is easily realized.

Figure 5 shows an alternative embodiment wherein the plate 15 at the rear is extended toward the front at 30, along the periphery of which a number of free-turning wheels 31 are mounted. The circle covered along the outside of wheels 31 forms a support surface that is movable relative to housing 1, so that a sufficient bounding is also obtained here to safeguard the line end 5, while the device can easily be moved forward over the field when it is used in the position according to figure 3b.

Figure 6 shows a development of the embodiment accord- ing to figure 5 wherein the wheels 31' are suitable for guiding a belt 32 which is trained therearound. The belt serves for a uniform support of the device in the position according to figure 3b.

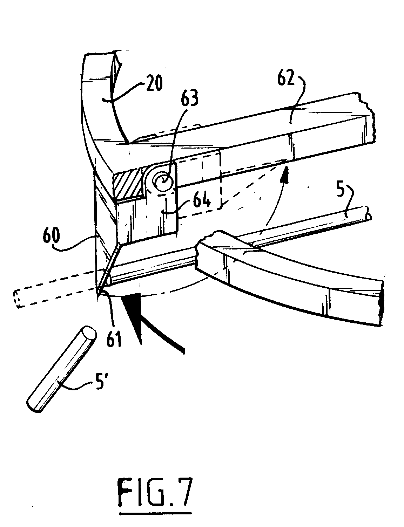

Figure 7 shows a detail of the bounding element 20, on the periphery of which is arranged a cutting member 60 in the form of a cutting blade. The cutting edge 61 is oriented such that, in the rotation direction of the wire 5, the end 5' thereof is cut off in order to bring wire 5 to the correct length relative to the axis of rotation.

If a longer wire is required, according to the embodiment in figure 7 the cutting blade 60 can be pivoted relative to the spoke 62 of the wheel 20, on which two arms 64 of blade 60 are rotatable round 63. The knife blade 60 can thus be folded away from the position drawn with full lines in figure 7 to a position drawn with dashed lines so that the wire 5 can move through beneath knife blade 60.

Shorter and longer wire ends can be realized by fixing knife-like cutting blades in other manner to for instance motor housing 1 respectively plate 15.

Shown for example in figure 1 is a knife blade 60 which is arranged on a bent arm 65 which is mounted in plate 15 for rotation at 66. A handle 67 is provided at the top end with which it is possible to turn knife blade 60 round the passage opening 66 and to thus place it under or outside the wheel-shaped bounding element 20. The wire can thereby be cut off shorter than the periphery of the wheel or longer than the periphery of the wheel or any intermediate length.

In figure 4 a knife blade 60 is arranged on a pin 68 which is supported on the housing by eyelet-like supports 69. The pin 68, and thus the knife 60, can be moved up and downward by means of the knob 70 such that the knife can be carried from a position above wheel 20 to below wheel 20. The wire 5 can hereby be cut of if at a desired short length. A reset spring 71 which acts on the pin 68 provides an automatic return of knife blade 60 above the wheel 20.

The invention is not limited to the above described embodiments.

## Claims

1. Device for trimming vegetation, such as grass and the like, comprising a motor housing (1), a motor (2) with motor shaft (3) mounted therein and a reel (4) carried by the shaft for at least one line, the or each end part of which is unwound and cut off over a pre-determined length and rotated round the motor shaft in an active plane perpendicular to the motor shaft, as well as a handle (10) connected to the housing and wherein a cover plate (15) connected to the housing is arranged on the same side of the housing as the handle, said cover plate (15) extending above the active plane, **characterized in that** a bounding element defining a curved outer periphery is arranged on the side of the housing remote from the handle and inbetween said cover plate and said plane and extending, as seen in the axial direction of the motor shaft, not further than the circle covered by the line, the bounding element being one or more wheels (20, 31).

2. Device as claimed in claim 1, **characterized in that** said one wheel (20) being mounted rotatable concentrically round said motor shaft (3).

3. Device as claimed in claim 2, **characterized in that** said one wheel is provided with spokes.

4. Device as claimed in claim 1, wherein said cover plate (15) supports a plurality of wheels (31), **characterized in that** a flexible element such as a belt (32) is trained round the wheels (31).

5. Device as claimed in claim 1 or 4, **characterized in that** the or a wheel (20, 31) is driven.

6. Device as claimed in any of the foregoing claims, **characterized in that** connected to the housing is arranged a support (25) which extends outside the active plane of the line end to a position close to the rotation axis (3) of the line reel (4).

7. Device as claimed in claim 6, **characterized in that** the carriage support (25) is embodied with a part (28) that is arranged pivotally relative to the motor housing (1).

8. Device as claimed in claim 7, **characterized in that** the support is height-adjustable, that is, toward and away from the motor.

9. Device as claimed in claim 7 or 8, **characterized in that** the support is coupled releasably (29) to the housing.

10. Device as claimed in any of the claims 7-9, **characterized in that** the pivot shaft (29) of the carriage (25) support extends parallel to the motor shaft (3) and at a distance therefrom.

11. Device as claimed in any of the claims 7-10, **characterized in that** the carriage support has a fork-shaped end (27).

12. Device as claimed in any of the foregoing claims**, characterized in that** a cutting member (60) can be arranged in the space lower than the bounding element embodied as a wheel (20).

13. Device as claimed in claim 12, **characterized in that** the cutting member (60) can be adjusted to different distances relative to the motor shaft.

14. Device as claimed in claim 12 or 13, **characterized in that** the cutting member is arranged on the bounding element embodied as a wheel.

## Patentansprüche

1. Vorrichtung zum Beschneiden von Pflanzenwuchs, wie Gras und dergleichen, mit einem Motorgehäuse (1), einem darin eingebauten Motor (2) mit einer Motorwelle (3) und einer durch die Welle gehaltenen Spule (4) für wenigstens eine(n) Schnur bzw. Draht, wobei das oder jedes Ende der Schnur abgewickelt und auf eine vorbestimmte Länge abgeschnitten ist und um die Motorwelle in einer Wirkebene senkrecht zu der Motorwelle gedreht wird, sowie einem mit dem Gehäuse verbundenen Handgriff (10), wobei eine mit dem Gehäuse verbundene Abdeckplatte (15) an der gleichen Seite des Gehäuses wie der Handgriff angeordnet ist und sich die Abdeckplatte (15) oberhalb der Wirkebene erstreckt,
**dadurch gekennzeichnet,**
daß ein Randelement, welches einen gekrümmten Außenumfang definiert, an der dem Handgriff abgewandten Seite des Gehäuses und zwischen der Abdeckplatte und der Ebene angeordnet ist und sich, in der Axialrichtung der Motorwelle betrachtet, nicht weiter als der durch die Schnur abgedeckte Kreis erstreckt, wobei das Randelement durch ein oder mehrere Räder (20, 31) gebildet ist.

2. Vorrichtung nach Anspruch 1,
**dadurch gekennzeichnet,**
daß das eine Rad (20) drehbar konzentrisch um die Motorwelle (3) befestigt ist.

3. Vorrichtung nach Anspruch 2,
**dadurch gekennzeichnet,**
daß das eine Rad mit Speichen versehen ist.

4. Vorrichtung nach Anspruch 1, wobei die Abdeckplatte (15) mehrere Räder (31) trägt,
**dadurch gekennzeichnet,**
daß ein elastisches Element, wie ein Riemen (32), um die Räder (31) gezogen ist.

5. Vorrichtung nach Anspruch 1 oder 4,
**dadurch gekennzeichnet,**
daß das oder die Räder (20, 31) angetrieben sind.

6. Vorrichtung nach einem der vorangehenden Ansprüche,
**dadurch gekennzeichnet,**
daß mit dem Gehäuse verbunden eine Abstützung (25) angeordnet ist, die sich außerhalb der Wirkebene des Schnurendes zu einer Position nahe der Drehachse (3) der Schnurspule (4) erstreckt.

7. Vorrichtung nach Anspruch 6,
**dadurch gekennzeichnet,**
daß die Schlittenabstützung (25) ein Teil (28) aufweist, das bezüglich des Motorgehäuses (1) schwenkbar angeordnet ist.

8. Vorrichtung nach Anspruch 7,
**dadurch gekennzeichnet,**
daß die Abstützung höhenverstellbar, d.h. in Richtung zum Motor hin und vom Motor weg verstellbar ist.

9. Vorrichtung nach Anspruch 7 oder 8,
**dadurch gekennzeichnet,**
daß die Abstützung lösbar (29) mit dem Gehäuse verbunden ist.

10. Vorrichtung nach einem der Ansprüche 7 bis 9,
**dadurch gekennzeichnet,**
daß die Schwenkachse (29) der Schlittenabstützung (25) parallel zu der Motorwelle (3) und in einem Abstand von dieser verläuft.

11. Vorrichtung nach einem der Ansprüche 7 bis 10,
**dadurch gekennzeichnet,**
daß die Schlittenabstützung ein gabelförmiges Ende (27) aufweist.

12. Vorrichtung nach einem der vorangehenden Ansprüche,
**dadurch gekennzeichnet,**
daß ein Schneidelement (60) in dem Raum unter dem als Rad (20) verkörperten Randelement angeordnet sein kann.

13. Vorrichtung nach Anspruch 12,
**dadurch gekennzeichnet,**
daß das Schneidelement (60) auf unterschiedliche Abstände bezüglich der Motorwelle eingestellt sein kann.

14. Vorrichtung nach Anspruch 12 oder 13,
**dadurch gekennzeichnet,**
daß das Schneidelement auf dem als Rad verkörperten Randelement angeordnet ist.

## Revendications

1. Dispositif pour tailler de la végétation telle que de l'herbe et analogue, comprenant un carter de moteur (1), un moteur (2) muni d'un arbre de moteur (3) monté à l'intérieur et une bobine (4) portée par l'arbre pour recevoir au moins une ligne de fil dont la ou chaque partie terminale se déroule et est coupée à une longueur prédéterminée et est entraînée en rotation autour de l'arbre du moteur dans un plan actif perpendiculaire a l'arbre du moteur, ainsi qu'un manche (10) relié au carter, et dans lequel une plaque de capot (15) solidaire du carter est agencée sur le même côté du carter que le manche, ladite plaque de capot (15) s'étendant au-dessus du plan actif, caractérisé en ce qu'un élément limite définissant une périphérie extérieure courbe est agencé sur le côté du carter qui est éloigné du manche, et placé entre ladite plaque de capot et ledit plan et qui, vu dans la direction axiale de l'arbre du moteur, ne se prolonge pas plus loin que le cercle couvert par la ligne de fil, l'élément limite étant constitué par une ou plusieurs roues (20, 31).

2. Dispositif selon la revendication 1, caractérisé en ce que ladite une roue (20) est montée pour tourner concentriquement autour dudit arbre de moteur (3).

3. Dispositif selon la revendication 2, caractérisé en ce que ladite une roue est munie de rayons.

4. Dispositif selon la revendication 1, dans lequel ladite plaque de capot (15) supporte une pluralité de roues (31), caractérisé en ce qu'un élément flexible tel qu'une courroie (32) est passé sur les roues (31).

5. Dispositif selon la revendication 1 ou 4, caractérisé en ce que la roue ou une roue (20, 31) est entraînée.

6. Dispositif selon une quelconque des revendications précédentes, caractérisé en ce qu'au carter, est relié un support (25) agencé par rapport à ce carter, qui s'étend à l'extérieur du plan actif de l'extrémité de la ligne jusqu'à une position proche de l'axe de rotation (3) de la bobine de ligne (4).

7. Dispositif selon la revendication 6, caractérisé en ce que le support chariot (25) comprend une partie (28) qui est agencée pour pouvoir pivoter par rapport au carter (1) du moteur.

8. Dispositif selon la revendication 7, caractérisé en ce que le support est réglable en hauteur, c'est-à-dire dans le sens qui le rapproche et l'éloigne du moteur.

9. Dispositif selon la revendication 7 ou 8, caractérisé en ce que le support est accouplé au carter de façon démontable (29).

10. Dispositif selon une quelconque des revendications 7-9, caractérisé en ce que l'arbre pivot (29) du support chariot (25) s'étend parallèlement à l'arbre de moteur (3) et à distance de ce dernier.

11. Dispositif selon une quelconque des revendications 7-10, caractérisé en ce que le support chariot possède une extrémité (27) en forme de fourche.

12. Dispositif selon une quelconque des revendications précédentes, caractérisé en ce qu'un élément de coupe (60) peut être agencé dans l'espace situé plus bas que l'élément limite réalisé sous la forme d'une roue (20).

13. Dispositif selon la revendication 12, caractérisé en ce que l'élément de coupe (60) peut être réglé à différentes distances de l'arbre du moteur.

14. Dispositif selon la revendication 12 ou 13, caractérisé en ce que l'élément de coupe est agencé sur l'élément limite réalisé sous la forme d'une roue.
